# EUROPEAN PATENT SPECIFICATION

(11) **EP 3 573 303 B1**
(45) Date of publication and mention of the grant of the patent: **19.06.2024**
(21) Application number: 17896035.7
(22) Date of filing: 08.02.2017
(51) Int. Cl.: H04L 41/0853, H04L 41/0806, H04L 41/12, H04L 69/24, H04L 41/342, H04L 41/0895

(54) **FORWARDER NETWORK-ACCESS RECOGNITION METHOD, SDN CONTROLLER, AND FORWARDER**
ZUGANGSERKENNUNGSVERFAHREN FÜR FORWARDER-NETZWERK, SDN-STEUERGERÄT UND FORWARDER
PROCÉDÉ DE RECONNAISSANCE D'ACCÈS AU RÉSEAU PAR UN RÉACHEMINEUR, CONTRÔLEUR SDN, ET RÉACHEMINEUR

(43) Date of publication of application: 27.11.2019
(73) Proprietor: Huawei Technologies Co., Ltd., Longgang District Shenzhen, Guangdong 518129 (CN)
(72) Inventor: SHI, Shuguang, Shenzhen Guangdong 518129 (CN); ZHANG, Yanhua, Shenzhen Guangdong 518129 (CN); NING, Yilin, Shenzhen Guangdong 518129 (CN)
(74) Representative: Gill Jennings & Every LLP
(86) International application number: PCT/CN2017/073117
(87) International publication number: WO 2018/145267

(56) References cited:
- EP-A1- 2 592 781
- WO-A1-2016/206741
- CN-A- 103 200 122
- CN-A- 103 391 296
- CN-A- 104 389 803
- US-A1- 2016 294 644
- Anonymous: "YANG - Wikipedia, the free encyclopedia", , 28 August 2016 (2016-08-28), XP055805980, Retrieved from the Internet: URL:https://web.archive.org/web/2016082817 5509/https://en.wikipedia.org/wiki/YANG [retrieved on 2021-05-19]

## Description

### TECHNICAL FIELD

Implementations of the present disclosure relate to the communications field, and in particular, to an identification method for network access of a forwarder, an SDN controller, and a forwarder.

### BACKGROUND

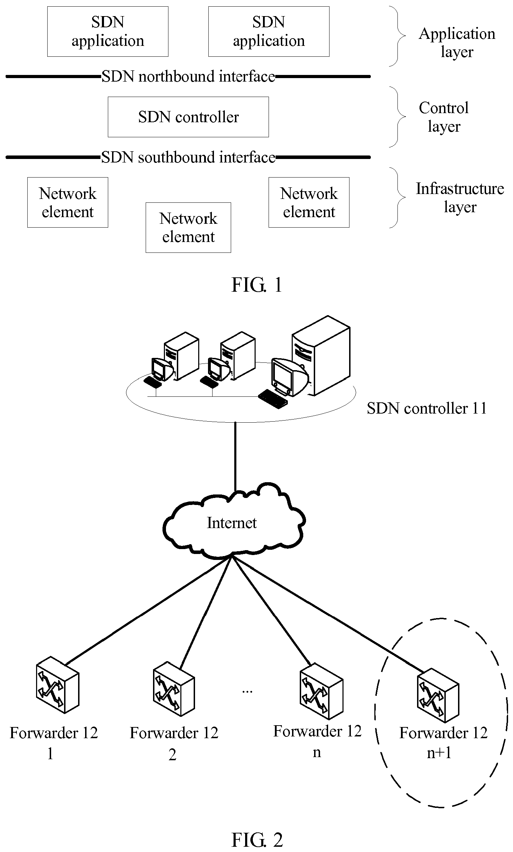

Software-defined networking (Software-Defined Network, SDN) is a new network architecture proposed by the Clean Slate research group of Stanford University in the United States, and a core technology of the SDN is OpenFlow (OpenFlow) in which a control plane and a data plane of a network device are separated to flexibly control network traffic and provide a good platform for innovation of a core network and an application. As shown in FIG. 1, a typical SDN architecture includes three layers: an application layer (Application layer), a control layer (Control layer), and an infrastructure layer (Infrastructure layer). An SDN application (SDN application) is deployed on the application layer. An SDN controller (SDN controller) is deployed on the control layer, and is mainly responsible for orchestrating resources of the infrastructure layer, maintaining a network topology, and the like. A network element (Network element) such as a switch or a router (collectively referred to as a forwarder below) is deployed on the infrastructure layer, and may perform data processing, data forwarding, and the like based on a flow table delivered by the SDN controller. In this network architecture, network control is separated from a physical network topology, so that a hardware limitation on the network topology is removed. In other words, if the network topology needs to be adjusted, expanded, or upgraded, only the control layer needs to be correspondingly modified, but the network element in the infrastructure layer does not need to be replaced. In this way, costs can be greatly reduced, and an iteration cycle of the network topology can be significantly shortened.

In an SDN scenario, to improve performance, new forwarders need to access an existing SDN system one after another. In addition, forwarders in the SDN scenario are characterized by a simple structure, a low production requirement, low costs, easy integration, and the like, and therefore may be produced by a plurality of suppliers. Forwarders produced by different suppliers may be configured differently. As a result, when a new forwarder accesses the existing SDN system, an SDN controller needs to be capable of identifying the newly accessing forwarder. Currently, in the existing SDN system, software of the SDN controller is released first. Therefore, when the new forwarder accesses the existing SDN system, the SDN controller may be incapable of learning of hardware information, specification information, or other information of the newly network-accessed forwarder. Consequently, the SDN controller cannot identify the newly network-accessed forwarder, and cannot manage the newly network-accessed forwarder. For example, a control interface cannot display the newly network-accessed forwarder, service data cannot be configured for the newly network-accessed forwarder, or offline addition, deletion, or other operations cannot be performed on the newly network-accessed forwarder. In a method in the prior art, the SDN controller is upgraded first before access of the new forwarder, so that the upgraded SDN controller can identify the newly accessing forwarder, and can manage the newly accessing forwarder.

The prior art has at least the following problem: In the SDN scenario, the SDN controller is usually deployed centrally, and manages a plurality of forwarders. As a result, when the SDN controller is being upgraded, a service of the SDN controller needs to be suspended. Consequently, an ongoing network service is affected. Especially in a scenario with intensive access of new forwarders, this problem is particularly severe, leading to poor user experience. In addition, upgrading the SDN controller to support a newly accessing forwarder increases network access costs of the new device.

US 2016/0294644 relates to controller supported service maps within a federation of forwarding boxes. EP 2 592 781 relates to method and system for managing network topologies in home networks.

### SUMMARY

Implementations of the present disclosure provide an identification method for network access of a forwarder, an SDN controller, and a forwarder, to resolve problems of high network access costs and impact on an ongoing network service that are caused when a new forwarder accesses an existing SDN system.

The invention has been defined in the independent claims. Further specific technical features have been defined in the dependent claims.

According to the principles described in the present application, the SDN controller receives the registration information of the first forwarder; when determining that the hardware device capability information base does not include the device type or the device model of the first forwarder included in the registration information, sends, to the first forwarder, the PnP data request used to request the first forwarder to report the device capability information; and receives the device capability information from the first forwarder. In this way, if a new forwarder accesses an existing SDN system, when determining that the hardware device capability information base does not include a device type or a device model of the forwarder, the SDN controller can accurately learn of device capability information of the newly network-accessed forwarder by sending a PnP data request to the forwarder. In other words, for access of the new forwarder, the SDN controller can identify the newly network-accessed forwarder without being upgraded, thereby resolving problems of high network access costs and impact on an ongoing network service that are caused when the new forwarder accesses the existing SDN system.

### BRIEF DESCRIPTION OF DRAWINGS

FIG. 1 is a schematic diagram of a typical SDN architecture in the prior art;
FIG. 2 is a simplified schematic diagram of an SDN system to which an implementation of the present disclosure is applied according to implementations of the present disclosure;
FIG. 3 is a schematic composition diagram of an SDN controller according to an implementation of the present disclosure;
FIG. 4 is a schematic composition diagram of a forwarder according to an implementation of the present disclosure;
FIG. 5 is a flowchart of an identification method for network access of a forwarder according to an implementation of the present disclosure;
FIG. 6 is a flowchart of another identification method for network access of a forwarder according to an implementation of the present disclosure;
FIG. 7 is a schematic composition diagram of an SDN controller according to an implementation of the present disclosure;
FIG. 8 is a schematic composition diagram of another SDN controller according to an implementation of the present disclosure;
FIG. 9 is a schematic composition diagram of a forwarder according to an implementation of the present disclosure; and
FIG. 10 is a schematic composition diagram of another forwarder according to an implementation of the present disclosure.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

To resolve problems of high network access costs and impact on an ongoing network service that are caused when a new forwarder accesses an existing SDN system, implementations of the present disclosure provide an identification method for network access of a forwarder. A basic principle of the method is as follows: An SDN controller receives registration information from a first forwarder, where the registration information may include a device type and a device model of the first forwarder; when determining that a hardware device capability information base does not include the device type or the device model of the first forwarder, the SDN controller sends a PnP data request to the first forwarder, where the PnP data request is used to request the first forwarder to report device capability information; and the SDN controller receives the device capability information from the first forwarder. In this way, if the new forwarder accesses the existing SDN system, when determining that the hardware device capability information base does not include a device type or a device model of the forwarder, the SDN controller can accurately learn of device capability information of the newly network-accessed forwarder by sending a PnP data request to the forwarder. In other words, for access of the new forwarder, the SDN controller can identify the newly network-accessed forwarder without being upgraded, thereby resolving the problems of high network access costs and impact on an ongoing network service that are caused when the new forwarder accesses the existing SDN system.

The following describes implementations of the implementations of the present disclosure in detail with reference to the accompanying drawings.

FIG. 2 is a simplified schematic diagram of an SDN system to which an implementation of the present disclosure can be applied. As shown in FIG. 2, the SDN system may include an SDN controller 11 and a forwarder 12.

In addition, it is assumed that in the SDN system, there are n+1 forwarders 12. An (n+1)^{th} forwarder 12 is a new forwarder accessing the SDN system, and a first forwarder 12 to an n^{th} forwarder 12 are forwarders that have accessed the SDN system before the (n+1)^{th} forwarder 12 accesses the SDN system. Certainly, this implementation of the present disclosure is also applicable to a scenario in which no forwarder has accessed the SDN system before the (n+1)^{th} forwarder 12 accesses the SDN system. It should be noted that, in this implementation of the present disclosure, the new forwarder accessing the SDN system may be a forwarder that accesses the SDN system for the first time, or may be a forwarder that is reset and restarted.

The SDN controller 11 is deployed centrally, and is mainly responsible for orchestrating resources of an infrastructure layer and maintaining a network topology. Specifically, the SDN controller 11 is mainly configured to manage the forwarder 12, for example, configure service data for the forwarder 12, or perform offline addition, deletion, or other management operations on the forwarder 12.

The forwarder 12 may be specifically a network element such as a switch or a router. The forwarder 12 may perform an operation such as data processing or data forwarding based on a flow table delivered by the SDN controller 11.

The SDN controller 11 may communicate with the forwarder 12 by using the OpenFlow protocol and the NETCONF protocol.

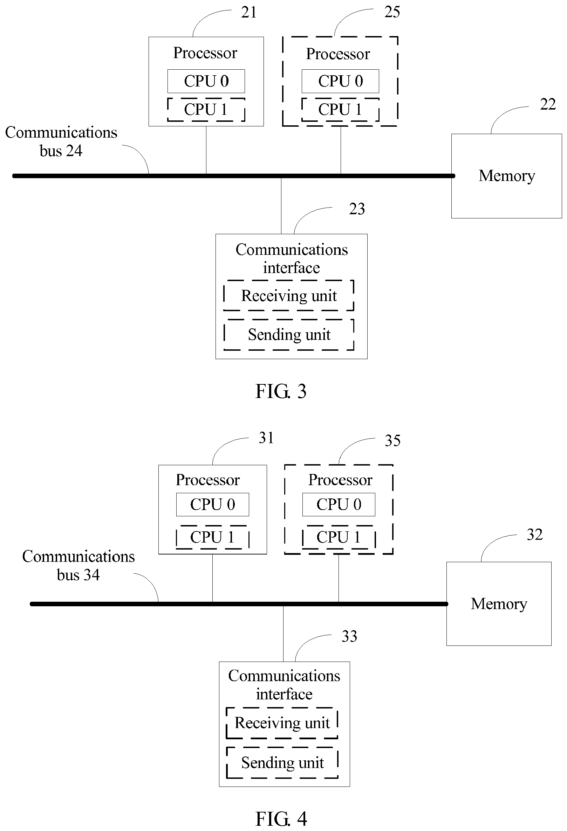

FIG. 3 is a schematic composition diagram of an SDN controller according to an implementation of the present disclosure. As shown in FIG. 3, the SDN controller may include at least one processor 21, a memory 22, a communications interface 23, and a communications bus 24.

The following specifically describes the components of the SDN controller with reference to FIG. 3.

The processor 21 is a control center of the SDN controller, and may be one processor or may be a collective name of a plurality of processing elements. For example, the processor 21 is a central processing unit (Central Processing Unit, CPU), or may be an application-specific integrated circuit (Application-Specific Integrated Circuit, ASIC), or is configured as one or more integrated circuits for implementing this implementation of the present disclosure, for example, one or more digital signal processors (Digital Signal Processor, DSP), or one or more field programmable gate arrays (Field Programmable Gate Array, FPGA).

The processor 21 may perform various functions of the SDN controller by running or executing a software program stored in the memory 22 and invoking data stored in the memory 22.

During specific implementation, in an implementation, the processor 21 may include one or more CPUs, for example, a CPU 0 and a CPU 1 shown in FIG. 3.

During specific implementation, in an implementation, the SDN controller may include a plurality of processors, for example, the processor 21 and a processor 25 shown in FIG. 3. Each of these processors may be a single-CPU (single-CPU) processor or may be a multi-CPU (multi-CPU) processor. The processor herein may be one or more devices, circuits, and/or processing cores for processing data (for example, a computer program instruction).

The memory 22 may be, but is not limited to, a read-only memory (Read-Only Memory, ROM) or another type of static storage device capable of storing static information and instructions, a random access memory (Random Access Memory, RAM) or another type of dynamic storage device capable of storing information and instructions, an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, and a Blu-ray disc, or the like), a magnetic disk storage medium or another magnetic storage device, or any other medium that can be used to carry or store expected program code in an instruction or data structure form and can be accessed by a computer. The memory 22 may exist independently, and is connected to the processor 21 through the communications bus 24. Alternatively, the memory 22 may be integrated with the processor 21.

The memory 22 is configured to store a software program for executing the solutions in the present disclosure under control of the processor 21.

The communications interface 23 is any apparatus such as a transceiver, and configured to communicate with another device or a communications network such as the Ethernet, a radio access network (Radio Access Network, RAN), or a wireless local area network (Wireless Local Area Network, WLAN). The communications interface 23 may include a receiving unit for implementing a receiving function and a sending unit for implementing a sending function.

The communications bus 24 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 3, but this does not mean that there is only one bus or only one type of bus.

The device structure shown in FIG. 3 does not constitute a limitation on the SDN controller. The SDN controller may include more or fewer components than those shown in the figure, or may combine some components, or have different component arrangements.

FIG. 4 is a schematic composition diagram of a forwarder according to an implementation of the present disclosure. This implementation has not been claimed as such. As shown in FIG. 4, the forwarder may include at least one processor 31, a memory 32, a communications interface 33, and a communications bus 34.

The following specifically describes the components of the forwarder with reference to FIG. 4.

The processor 31 is a control center of the forwarder, and may be one processor or may be a collective name of a plurality of processing elements. For example, the processor 31 is a CPU, or may be an ASIC, or is configured as one or more integrated circuits for implementing this implementation of the present disclosure, for example, one or more DSPs or one or more FPGAs.

The processor 31 may perform various functions of the forwarder by running or executing a software program stored in the memory 32 and invoking data stored in the memory 32.

During specific implementation, in an implementation, the processor 31 may include one or more CPUs, for example, a CPU 0 and a CPU 1 shown in FIG. 4.

During specific implementation, in an implementation, the forwarder may include a plurality of processors, for example, the processor 31 and a processor 35 shown in FIG. 4. Each of these processors may be a single-CPU processor or may be a multi-CPU processor. The processor herein may be one or more devices, circuits, and/or processing cores for processing data (for example, a computer program instruction).

The memory 32 may be, but is not limited to, a ROM or another type of static storage device capable of storing static information and instructions, a RAM or another type of dynamic storage device capable of storing information and instructions, an EEPROM, a CD-ROM or another compact disc storage, an optical disc storage (including a compact disc, a laser disc, an optical disc, a digital versatile disc, and a Blu-ray disc, or the like), a magnetic disk storage medium or another magnetic storage device, or any other medium that can be used to carry or store expected program code in an instruction or data structure form and can be accessed by a computer. The memory 32 may exist independently, and is connected to the processor 31 through the communications bus 34. Alternatively, the memory 32 may be integrated with the processor 31.

The memory 32 is configured to store a software program for executing the solutions in the present disclosure under control of the processor 31.

The communications interface 33 is any apparatus such as a transceiver, and configured to communicate with another device or a communications network such as the Ethernet, a RAN, or a WLAN. The communications interface 33 may include a receiving unit for implementing a receiving function and a sending unit for implementing a sending function.

The communications bus 34 may be an ISA bus, a PCI bus, an EISA bus, or the like. The bus may be classified into an address bus, a data bus, a control bus, and the like. For ease of representation, only one thick line is used to represent the bus in FIG. 4, but this does not mean that there is only one bus or only one type of bus.

The device structure shown in FIG. 4 does not constitute a limitation on the forwarder. The forwarder may include more or fewer components than those shown in the figure, or may combine some components, or have different component arrangements.

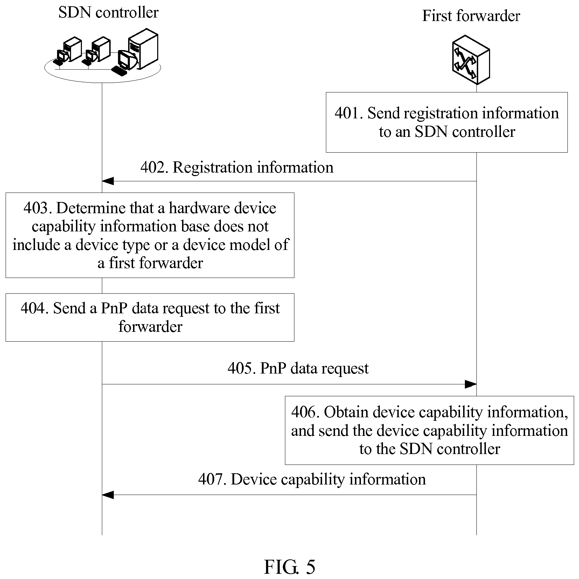

FIG. 5 is a flowchart of an identification method for network access of a forwarder according to an implementation of the present disclosure. As shown in FIG. 5, the method may include the following steps.

401. A first forwarder sends registration information to an SDN controller.

The registration information includes a device type and a device model of the first forwarder. For example, the first forwarder may send the registration information to the SDN controller after being completely powered on.

402. The SDN controller receives the registration information from the first forwarder.

403. The SDN controller determines that a hardware device capability information base does not include a device type or a device model of the first forwarder.

404. The SDN controller sends a PnP data request to the first forwarder.

The PnP data request is used to request the first forwarder to report device capability information.

405. The first forwarder receives the PnP data request from the SDN controller.

406. The first forwarder obtains device capability information, and sends the device capability information to the SDN controller.

407. The SDN controller receives the device capability information from the first forwarder.

In the identification method for network access of a forwarder provided in this implementation of the present disclosure, the SDN controller receives the registration information of the first forwarder; when determining that the hardware device capability information base does not include the device type or the device model of the first forwarder included in the registration information, sends, to the first forwarder, the PnP data request used to request the first forwarder to report the device capability information; and receives the device capability information from the first forwarder. In this way, if a new forwarder accesses an existing SDN system, when determining that the hardware device capability information base does not include a device type or a device model of the forwarder, the SDN controller can accurately learn of device capability information of the newly network-accessed forwarder by sending a PnP data request to the forwarder. In other words, for access of the new forwarder, the SDN controller can identify the newly network-accessed forwarder without being upgraded, thereby resolving problems of high network access costs and impact on an ongoing network service that are caused when the new forwarder accesses the existing SDN system.

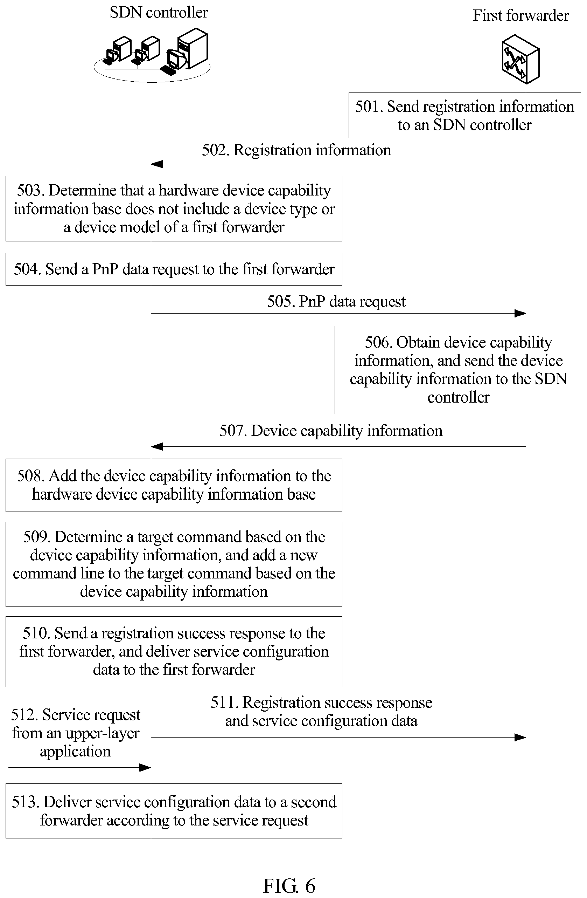

FIG. 6 is a flowchart of another identification method for network access of a forwarder according to an implementation of the present disclosure. As shown in FIG. 6, the method may include the following steps.

501. A first forwarder sends registration information to an SDN controller.

The registration information includes a device type and a device model of the first forwarder. The first forwarder is a new forwarder accessing an SDN system. For example, after being completely powered on, the first forwarder may send the registration information including the device type and the device model of the first forwarder to the SDN controller through an OpenFlow channel.

For example, it is assumed that a new forwarder needs to be introduced into the existing SDN system. In this case, after the new forwarder accesses the SDN system and is completely powered on, the new forwarder may send registration information to the SDN controller through an OpenFlow channel. Alternatively, when a forwarder in the existing SDN system is powered off and needs to be re-powered on, after being completely powered on, the forwarder may send registration information to the SDN controller through an OpenFlow channel.

For example, the registration information may be sent to the SDN controller in a form of an Internet Protocol (Internet Protocol, IP) packet.

502. The SDN controller receives the registration information from the first forwarder.

The SDN controller may receive the registration information from the first forwarder through the OpenFlow channel.

503. The SDN controller determines that a hardware device capability information base does not include a device type or a device model of the first forwarder.

After the SDN controller receives the registration information from the first forwarder, the SDN controller may perform comparison and analysis on the registration information reported by the first forwarder, to determine, by determining whether the hardware device capability information base includes the device type and the device model of the first forwarder, whether the SDN system supports the first forwarder.

For example, during specific implementation, the hardware device capability information base of the SDN controller prestores device types and device models of all supported forwarders. The SDN controller may determine, by determining whether the hardware device capability information base includes the device type and the device model of the first forwarder, whether the SDN system supports the first forwarder. When the SDN controller determines that the hardware device capability information base includes the device type and the device model of the first forwarder, the SDN controller may determine that the SDN system supports the first forwarder. In this case, the SDN controller may deliver service configuration data to the first forwarder. When the SDN controller determines that the hardware device capability information base does not include the device type or the device model of the first forwarder, the SDN controller may determine that the SDN system does not support the first forwarder. In this case, the following step 504 may be performed.

504. The SDN controller sends a PnP data request to the first forwarder.

The PnP data request is used to request the first forwarder to report device capability information. When the SDN controller determines that the hardware device capability information base does not include the device type or the device model of the first forwarder, the SDN controller may send, to the first forwarder, the PnP data request used to request the device capability information of the first forwarder.

For example, the PnP data request may be sent to the first forwarder in a form of an IP packet.

505. The first forwarder receives the PnP data request from the SDN controller.

506. The first forwarder obtains device capability information, and sends the device capability information to the SDN controller.

After the first forwarder receives the PnP data request from the SDN controller, the first forwarder may collect device data of the first forwarder to obtain the device capability information, and send the obtained device capability information to the SDN controller.

For example, the device capability information may be an XML file using a YANG model. In other words, after obtaining the device capability information of the first forwarder, the first forwarder may generate an XML file based on the device capability information of the first forwarder by using the YANG model, and report the XML file to the SDN controller.

The device capability information may include at least one of device information of the first forwarder and board information supported by the first forwarder. The device information may include at least one of the device type, the device model, a device description, a device capability set, a quantity of slots, and supported slot information. The slot information may include at least one of a slot ID and a slot type. The board information may include at least one of a board type, a board name, a board description, a board capability set, a quantity of ports of a board, and port information of the board. The port information of the board may include at least one of a port ID, a port type, and a port description. In addition, for descriptions of device data included in the device capability information, refer to Table 1.

**Table 1**

| Category | Data item | | Data description |
|---|---|---|---|
| Device information | Device type | | It describes a type of a device, for example, a frame type or a box type. |
| | Device model | | It describes a model of the device, for example, an OLT. |
| | Device description | | It is an alias defined for ease of management, for example, OLT_123. |
| | Device capability set | | It describes a list of a set of capabilities supported by the device. |
| | Slot quantity | | It describes a quantity of slots of the device. |
| | Supported slot information (list) | Supported slot ID | It describes a number of a slot supported by the device. |
| | | Supported slot type | It describes a list of board types supported by the slot. |
| Supported board information (because the device may support a plurality of types of boards, the board information may be displayed in a form of a list) | Board type | | It describes a type of a board, for example, a main control board, an Ethernet access board (Ethernet Access Board, ETH board), or a passive optical network access board (Passive Optical Network Access Board, PON board). |
| | Board name | | It describes a name of the board. |
| | Board description | | It describes description information of the board. |
| | Board capability set | | It describes a list of a set of capabilities supported by the board. |
| | Quantity of ports of the board | | It describes the quantity of ports of the board. |
| | Port information of the board (list) | Port ID | It describes a number of a port of the board. |
| | | Port type | It describes a service type provided by the port, for example, an Ethernet port (Ethernet port, ETH) or a passive optical network (Passive Optical Network, PON) access port (Access port). |
| | | Port description | It is an alias defined for ease of management. |

507. The SDN controller receives the device capability information from the first forwarder.

After the SDN controller receives the device capability information from the first forwarder, the SDN controller may parse the device capability information of the first forwarder, and refresh a system rule and a northbound interface based on a parsing result. Specifically, the following step 508 and step 509 may be performed.

508. The SDN controller adds the device capability information to the hardware device capability information base.

The SDN controller may refresh related basic data based on the device capability information of the first forwarder, in other words, add the device capability information of the first forwarder to the hardware device capability information base, so that the SDN system can support the first forwarder.

509. The SDN controller determines a target command based on the device capability information, and adds a new command line to the target command based on the device capability information.

The SDN controller may refresh the northbound interface based on the device capability information of the first forwarder. Specifically, the SDN controller may determine the target command based on the device capability information of the first forwarder, and add the new command line to the target command based on the device capability information of the first forwarder. For example, the target command determined based on the device capability information of the first forwarder is add-device-board deviceId frameid/slotid {HS901GPBAIHS901GPBC}. If it is determined, based on the device capability information, that a slot supports HS901GPBF, a new command is set to add-device-board deviceId frameid/slotid {HS901GPBA|HS901GPBC|HS901GPBF}. In this way, the SDN controller can configure, offline based on the device capability information of the first forwarder, a forwarder that has the same device capability information as the first forwarder.

For example, the northbound interface may include at least one of a web interface, a Representational State Transfer (Representational State Transfer, REST) interface, a Transaction Language 1 (Transaction Language 1, TL1) interface, an American Standard Code for Information Interchange (American Standard Code for Information Interchange, ASCII) interface, and a command-line interface (Command-line Interface, CLI).

It should be noted that, in this implementation of the present disclosure, step 508 and step 509 are not necessarily performed in a particular order. In other words, step 508 may be performed before step 509, or step 509 may be performed before step 508, or step 508 and step 509 may be performed at the same time. In this implementation of the present disclosure, an order for performing step 508 and step 509 is not specifically limited herein.

510. The SDN controller sends a registration success response to the first forwarder, and delivers service configuration data to the first forwarder.

511. The first forwarder receives the registration success response from the SDN controller, and receives the service configuration data from the SDN controller.

In a process of performing the foregoing steps 501 to 511, an existing forwarder in the SDN system can still work normally, and the following steps 512 and step 513 are performed.

512. The SDN controller receives a service request from an upper-layer application.

513. The SDN controller delivers service configuration data to a second forwarder according to the service request.

The second forwarder is a forwarder that has successfully accessed the SDN system before the first forwarder is completely powered on.

In the identification method for network access of a forwarder provided in this implementation of the present disclosure, the SDN controller receives the registration information of the first forwarder; when determining that the hardware device capability information base does not include the device type or the device model of the first forwarder included in the registration information, sends, to the first forwarder, the PnP data request used to request the first forwarder to report the device capability information; and receives the device capability information from the first forwarder. In this way, if a new forwarder accesses the existing SDN system, when determining that the hardware device capability information base does not include a device type or a device model of the forwarder, the SDN controller can accurately learn of device capability information of the newly network-accessed forwarder by sending a PnP data request to the forwarder. In other words, for access of the new forwarder, the SDN controller can identify the newly network-accessed forwarder without being upgraded, thereby resolving problems of high network access costs and impact on an ongoing network service that are caused when the new forwarder accesses the existing SDN system.

The solutions provided in the implementations of the present disclosure are mainly described above from the perspective of interaction between network elements. It may be understood that, to implement the foregoing functions, the network elements such as the SDN controller and the forwarder include corresponding hardware structures and/or software modules for performing the functions. A person skilled in the art should easily be aware that, with reference to algorithms and steps in the examples described in the implementations disclosed in this specification, the present disclosure can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present disclosure.

In the implementations of the present disclosure, the SDN controller and the forwarder may be divided into function modules based on the foregoing method example. For example, each function module may be obtained through division for each corresponding function, or two or more functions may be integrated into one processing module. The integrated module may be implemented in a form of hardware, or may be implemented in a form of a software function module. It should be noted that the module division in the implementations of the present disclosure is an example, and is merely logical function division. There may be another division manner in actual implementation.

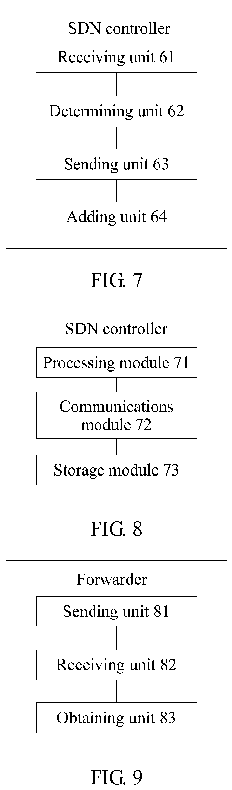

When each function module is obtained through division for each corresponding function, FIG. 7 is a possible schematic composition diagram of the SDN controller in the foregoing implementation. As shown in FIG. 7, the SDN controller may include a receiving unit 61, a determining unit 62, and a sending unit 63.

The receiving unit 61 is configured to support the SDN controller in performing step 402 and step 407 in the identification method for network access of a forwarder shown in FIG. 5, and step 502, step 507, and step 512 in the identification method for network access of a forwarder shown in FIG. 6.

The determining unit 62 is configured to support the SDN controller in performing step 403 in the identification method for network access of a forwarder shown in FIG. 5, and step 503 and the determining a target command based on the device capability information in step 509 in the identification method for network access of a forwarder shown in FIG. 6.

The sending unit 63 is configured to support the SDN controller in performing step 404 in the identification method for network access of a forwarder shown in FIG. 5, and step 504, step 510, and step 513 in the identification method for network access of a forwarder shown in FIG. 6.

In this implementation of the present disclosure, further, as shown in FIG. 7, the SDN controller may further include an adding unit 64.

The adding unit 64 is configured to support the SDN controller in performing step 508 and the adding a new command line to the target command based on the device capability information in step 509 in the identification method for network access of a forwarder shown in FIG. 6.

It should be noted that, all related content of steps in the foregoing method implementation may be cited in function descriptions of corresponding function modules, and details are not described herein again.

The SDN controller provided in this implementation of the present disclosure is configured to perform the foregoing identification method for network access of a forwarder, and therefore can achieve a same effect as the foregoing identification method for network access of a forwarder.

When an integrated unit is used, FIG. 8 is another possible schematic composition diagram of the SDN controller in the foregoing implementation. As shown in FIG. 8, the SDN controller includes a processing module 71 and a communications module 72.

The processing module 71 is configured to control and manage actions of the SDN controller. For example, the processing module 71 is configured to support the SDN controller in performing step 403 in FIG. 5, step 503, step 508, and step 509 in FIG. 6, and/or another process of the technology described in this specification. The communications module 72 is configured to support the SDN controller in communicating with another network entity, for example, communicating with a function module or a network entity shown in FIG. 2, FIG. 4, FIG. 9, or FIG. 10. Specifically, for example, the communications module 72 is configured to support the SDN controller in performing step 402, step 404, and step 407 in FIG. 5, and step 502, step 504, step 507, step 510, step 512, and step 513 in FIG. 6. The SDN controller may further include a storage module 73, configured to store program code and data of the SDN controller.

The processing module 71 may be a processor or a controller. The processing module 71 may implement or execute various example logical blocks, modules, and circuits described with reference to content disclosed in the present disclosure. Alternatively, the processor may be a combination for implementing a computing function, for example, a combination of one or more microprocessors, or a combination of a DSP and a microprocessor. The communications module 72 may be a transceiver, a transceiver circuit, a communications interface, or the like. The storage module 73 may be a memory.

When the processing module 71 is a processor, the communications module 72 is a communications interface, and the storage module 73 is a memory, the SDN controller in this implementation of the present disclosure may be the SDN controller shown in FIG. 3.

When each function module is obtained through division for each corresponding function, FIG. 9 is a possible schematic composition diagram of the forwarder in the foregoing implementation. As shown in FIG. 9, the forwarder may include a sending unit 81, a receiving unit 82, and an obtaining unit 83. This implementation has not been claimed as such.

The sending unit 81 is configured to support the forwarder in performing step 401 and the sending the device capability information to the SDN controller in step 406 in the identification method for network access of a forwarder shown in FIG. 5, and step 501 and the sending the device capability information to the SDN controller in step 506 in the identification method for network access of a forwarder shown in FIG. 6.

The receiving unit 82 is configured to support the forwarder in performing step 405 in the identification method for network access of a forwarder shown in FIG. 5, and step 505 and step 511 in the identification method for network access of a forwarder shown in FIG. 6.

The obtaining unit 83 is configured to support the forwarder in performing the obtaining device capability information in step 406 in the identification method for network access of a forwarder shown in FIG. 5, and the obtaining device capability information in step 506 in the identification method for network access of a forwarder shown in FIG. 6.

It should be noted that, all related content of steps in the foregoing method implementation may be cited in function descriptions of corresponding function modules, and details are not described herein again.

The forwarder provided in this implementation of the present disclosure is configured to perform the foregoing identification method for network access of a forwarder, and therefore can achieve a same effect as the foregoing identification method for network access of a forwarder.

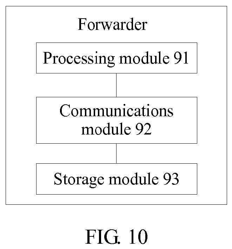

When an integrated unit is used, FIG. 10 is another possible schematic composition diagram of the forwarder in the foregoing implementation. As shown in FIG. 10, the forwarder includes a processing module 91 and a communications module 92. This implementation has not been claimed as such.

The processing module 91 is configured to control and manage actions of the forwarder. For example, the processing module 91 is configured to support the forwarder in performing the obtaining device capability information in step 406 in FIG. 5, the obtaining device capability information in step 506 in FIG. 6, and/or another process of the technology described in this specification. The communications module 92 is configured to support the forwarder in communicating with another network entity, for example, communicating with a function module or a network entity shown in FIG. 2, FIG. 3, FIG. 7, or FIG. 8. Specifically, for example, the communications module 92 is configured to support the forwarder in performing step 401, step 405, and the sending the device capability information to the SDN controller in step 406 in FIG. 5, and step 501, step 505, the sending the device capability information to the SDN controller in step 506, and step 511 in FIG. 6. The forwarder may further include a storage module 93, configured to store program code and data of the forwarder.

The processing module 91 may be a processor or a controller. The processing module 91 may implement or execute various example logical blocks, modules, and circuits described with reference to content disclosed in the present disclosure. Alternatively, the processor may be a combination for implementing a computing function, for example, a combination of one or more microprocessors, or a combination of a DSP and a microprocessor. The communications module 92 may be a transceiver, a transceiver circuit, a communications interface, or the like. The storage module 93 may be a memory.

When the processing module 91 is a processor, the communications module 92 is a communications interface, and the storage module 93 is a memory, the forwarder in this implementation of the present disclosure may be the forwarder shown in FIG. 4.

From the foregoing descriptions about implementations, a person skilled in the art can clearly understand that, for the purpose of convenient and brief description, only division of the foregoing function modules is used as an example for illustration. In actual application, the foregoing functions can be allocated to different modules and implemented as required. In other words, an internal structure of an apparatus is divided into different function modules to implement all or some of the functions described above.

In the implementations provided in this application, it should be understood that the disclosed apparatus and method may be implemented in other manners. For example, the described apparatus implementation is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of the implementations.

In addition, function units in the implementations of the present disclosure may be integrated into one processing unit, or each of the units may exist alone physically, or two or more units are integrated into one unit. The integrated unit may be implemented in a form of hardware, or may be implemented in a form of a software function unit.

When the integrated unit is implemented by a software function unit and sold or used as an independent product, the integrated unit may be stored in a readable storage medium. Based on such an understanding, the technical solutions in the implementations of the present disclosure essentially, or the part contributing to the prior art, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the implementations of the present disclosure. The foregoing storage medium includes various media that can store program code, such as a USB flash drive, a removable hard disk, a ROM, a RAM, a magnetic disk, or an optical disc.

The scope of protection shall be defined by the appended claims.

## Claims

1. An identification method for network access of a forwarder, comprising:
receiving (402), by a software-defined networking, SDN, controller, registration information from a first forwarder, wherein the registration information comprises a device type and a device model of the first forwarder;
determining (403), by the SDN controller, whether a hardware device capability information base comprises the device type or the device model included in the registration information received from the first forwarder;
when determining, by the SDN controller, that a hardware device capability information base does not comprise the device type or the device model included in the registration information received from the first forwarder, the method further comprises:
sending (404, 405), by the SDN controller, a plug and play, PnP, data request to the first forwarder, wherein the PnP data request is used to request the first forwarder to report device capability information; and
receiving (407), by the SDN controller, the device capability information from the first forwarder;
wherein the device capability information is an extensible markup language XML file using a YANG model; and
the device capability information comprises at least one of device information of the first forwarder and board information supported by the first forwarder,
wherein the board information comprises at least one of a board type, a board name, a board description, a board capability set, a quantity of ports of a board, and port information of the board; and the port information of the board comprises at least one of a port ID, a port type, and a port description.

2. The method according to claim 1, wherein after the receiving, by the SDN controller, the device capability information from the first forwarder, the method further comprises:
adding, by the SDN controller, the device capability information to the hardware device capability information base.

3. The method according to any one of claims 1 or 2, wherein the method further comprises:
determining, by the SDN controller, that the hardware device capability information base comprises the device type and the device model of the first forwarder; and
delivering, by the SDN controller, service configuration data to the first forwarder.

4. The method according to any one of claims 1 to 3, wherein
the device information comprises at least one of the device type, the device model, a device description, a device capability set, a quantity of slots, and supported slot information; and the slot information comprises at least one of a slot identifier ID and a slot type.

5. A software-defined networking, SDN, controller, comprising a receiving unit (61), a determining unit (62), and a sending unit (63), wherein
the receiving unit is configured to receive registration information from a first forwarder, wherein the registration information comprises a device type and a device model of the first forwarder;
the determining unit is configured to determine whether a hardware device capability information base comprises the device type or the device model included in the registration information received from the first forwarder, wherein the device type and the device model are received by the receiving unit;
the sending unit is configured to: when the determining unit determines that a hardware device capability information base does not comprise the device type or the device model included in the registration information received from the first forwarder, send a plug and play, PnP, data request to the first forwarder, wherein the PnP data request is used to request the first forwarder to report device capability information; and
the receiving unit is further configured to receive the device capability information from the first forwarder;
wherein the device capability information is an extensible markup language XML file using a YANG model; and
the device capability information comprises at least one of device information of the first forwarder and board information supported by the first forwarder,
wherein the board information comprises at least one of a board type, a board name, a board description, a board capability set, a quantity of ports of a board, and port information of the board; and the port information of the board comprises at least one of a port ID, a port type, and a port description.

6. The SDN controller according to claim 5, further comprising an adding unit (64), wherein
the adding unit is configured to add the device capability information received by the receiving unit to the hardware device capability information base.

7. The SDN controller according to any one of claims 5 or 6, wherein
the device information comprises at least one of the device type, the device model, a device description, a device capability set, a quantity of slots, and supported slot information; and the slot information comprises at least one of a slot identifier ID and a slot type.

## Patentansprüche

1. Identifizierungsverfahren für einen Forwarder-Netzwerkzugriff, umfassend:
Empfangen (402) von Registrierungsinformationen von einem ersten Forwarder durch ein softwaredefiniertes Netzwerk-, SDN-, Steuergerät, wobei die Registrierungsinformationen einen Vorrichtungstyp und ein Vorrichtungsmodell des ersten Forwarders umfassen;
Bestimmen (403) durch das SDN-Steuergerät, ob eine Hardware-Vorrichtungsfähigkeitsinformationsbasis den Vorrichtungstyp oder das Vorrichtungsmodell umfasst, die in den vom ersten Forwarder empfangenen Registrierungsinformationen enthalten sind;
wenn das SDN-Steuergerät feststellt, dass eine Hardware-Vorrichtungsfähigkeitsinformationsbasis nicht den Vorrichtungstyp oder das Vorrichtungsmodell umfasst, die in den vom ersten Forwarder empfangenen Registrierungsinformationen enthalten sind, das Verfahren weiterhin Folgendes umfasst:
Senden (404, 405) einer Plug-and-Play-PnP-Datenanforderung an den ersten Forwarder durch das SDN-Steuergerät, wobei die PnP-Datenanforderung verwendet wird, um den ersten Forwarder aufzufordern, Vorrichtungsfähigkeitsinformationen zu melden; und
Empfangen (407) der Vorrichtungsfähigkeitsinformationen von dem ersten Forwarder durch das SDN-Steuergerät;
wobei die Vorrichtungsfähigkeitsinformationen eine erweiterbare Markup-Sprach-XML-Datei unter Verwendung eines YANG-Modells sind; und
die Vorrichtungsfähigkeitsinformationen mindestens Vorrichtungsinformationen des ersten Forwarders und Platineninformationen umfassen, die von dem ersten Forwarder unterstützt werden,
wobei die Platineninformationen mindestens einen Platinentyp, einen Platinennamen, eine Platinenbeschreibung, einen Platinenfähigkeitssatz, eine Anzahl von Ports einer Platine und Portinformationen der Platine umfassen; und die Portinformationen der Platine mindestens eine Port-ID, einen Porttyp und eine Portbeschreibung umfassen.

2. Verfahren nach Anspruch 1, wobei das Verfahren nach dem Empfangen der Vorrichtungsfähigkeitsinformationen von dem ersten Forwarder durch das SDN-Steuergerät weiterhin Folgendes umfasst:
Hinzufügen der Vorrichtungsfähigkeitsinformationen zur Hardware-Vorrichtungsfähigkeitsinformationsbasis durch das SDN-Steuergerät.

3. Verfahren nach einem der Ansprüche 1 oder 2, wobei das Verfahren ferner Folgendes umfasst:
Bestimmen durch das SDN-Steuergerät, dass die Hardware-Vorrichtunsfähigkeitsinformationsbasis den Vorrichtungstyp und das Vorrichtunsmodell des ersten Forwarders umfasst; und
Übermitteln von Dienstkonfigurationsdaten durch das SDN-Steuergerät an den ersten Forwarder.

4. Verfahren nach einem der Ansprüche 1 bis 3, wobei die Vorrichtungsinformationen mindestens einen Vorrichtungstyp, ein Vorrichtungsmodell, eine Vorrichtungsbeschreibung, einen Vorrichtungsfähigkeitssatz, die Anzahl der Steckplätze und unterstützte Steckplatzinformationen; und die Steckplatzinformationen mindestens eine Steckplatzidentifizierungs-ID und einen Steckplatztyp.

5. Softwaredefiniertes Netzwerk-, SDN-, Steuergerät, das eine Empfangseinheit (61), eine Bestimmungseinheit (62) und eine Sendeeinheit (63) umfasst, wobei
die Empfangseinheit so konfiguriert ist, dass sie Registrierungsinformationen von einem ersten Forwarder empfängt, wobei die Registrierungsinformationen einen Vorrichtungstyp und ein Vorrichtungsmodell des ersten Fowarders umfassen;
die Bestimmungseinheit so konfiguriert ist, dass sie bestimmt, ob eine Hardware-Vorichtungsfähigkeitsinformationsbasis den Vorrichtungstyp oder das Vorrichtungsmodell umfasst, die in den von dem ersten Forwarder empfangenen Registrierungsinformationen enthalten sind, wobei der Vorrichtungstyp und das Vorrichtungsmodell von der Empfangseinheit empfangen werden;
die Sendeeinheit so konfiguriert ist, dass sie, wenn die Bestimmungseinheit bestimmt, dass eine Hardware-Vorichtungsfähigkeitsinformationsbasis nicht den Vorrichtungstyp oder das Vorrichtungsmodell umfasst, die in den vom ersten Fowarder empfangenen Registrierungsinformationen beinhaltet sind, eine Plug-and-Play-Datenanforderung (PnP) an den ersten Forwarder sendet, wobei die PnP-Datenanforderung verwendet wird, um den ersten Forwarder aufzufordern, Vorrichtungsfähigkeitsinformationen zu melden; und
die Empfangseinheit außerdem so konfiguriert ist, dass sie die Vorrichtungsfähigkeitsinformationen von dem ersten Forwarder empfängt;
wobei die Vorrichtungsfähigkeitsinformationen eine erweiterbare Markup-Sprach-XML-Datei unter Verwendung eines YANG-Modells sind; und
die Vorrichtungsfähigkeitsinformationen mindestens Vorrichtungsinformationen des ersten Forwarders und Platineninformationen umfassen, die von dem ersten Forwarder unterstützt werden,
wobei die Platineninformationen mindestens einen Platinentyp,
einen Platinennamen, eine Platinenbeschreibung, einen Platinenfähigkeitssatz, eine Anzahl von Ports einer Platine und Portinformationen der Platine umfassen; und die Portinformationen der Platine mindestens eine Port-ID, einen Porttyp und eine Portbeschreibung umfassen.

6. SDN-Steuergerät nach Anspruch 5, ferner umfassend eine Addiereinheit (64), wobei
die Addiereinheit so konfiguriert ist, dass sie die von der Empfangseinheit empfangenen Vorrichungsfähigkeitsinformationen zur Hardware-Vorrichtungsfähigkeitsinformationsbasis hinzufügt.

7. SDN-Steuergerät nach einem der Ansprüche 5 oder 6, wobei die Vorrichtungsinformationen mindestens einen Vorrichtungstyp, ein Vorrichtungsmodell, eine Vorrichtungsbeschreibung, einen Vorrichtungsfähigkeitssatz, die Anzahl der Steckplätze und unterstützte Steckplatzinformationen; und die Steckplatzinformationen mindestens eine Steckplatzidentifizierungs-ID und einen Steckplatztyp.

## Revendications

1. Procédé d'identification pour l'accès au réseau d'un transmetteur, comprenant :
la réception (402), par un dispositif de commande de mise en réseau définie par logiciel (SDN) des informations d'enregistrement provenant d'un premier transmetteur, dans lequel les informations d'enregistrement comprennent un type de dispositif et un modèle de dispositif du premier transmetteur ;
la détermination (403), par le dispositif de commande SDN, de l'existence d'une base d'informations sur la capacité du dispositif matériel comprenant le type de dispositif ou le modèle de dispositif inclus dans les informations d'enregistrement reçues de la part du premier transmetteur ;
lors de la détermination, par le dispositif de commande SDN, de l'existence d'une base d'informations de sur la capacité du dispositif matériel comprenant le type de dispositif ou le modèle de dispositif inclus dans les informations d'enregistrement reçues de la part du premier transmetteur, le procédé comprend également :
l'envoi (404, 405), par le dispositif de commande SDN, d'une demande de données plug and play (PnP) au premier transmetteur, dans lequel la demande de données PnP est utilisée pour demander au premier transmetteur de rapporter des informations sur la capacité du dispositif ; et
la réception (407), par le dispositif de commande SDN, des informations sur la capacité du dispositif provenant du premier transmetteur ;
dans lequel les informations sur la capacité du dispositif sont un fichier XML de langage de balisage extensible utilisant un modèle YANG ; et
les informations sur la capacité du dispositif comprennent au moins l'une des informations sur le dispositif du premier transmetteur et des informations de carte prises en charge par le premier transmetteur,
dans lequel les informations de carte comprennent au moins un type de carte, un nom de carte, une description de carte, un ensemble de capacités de carte, une quantité de ports d'une carte et des informations de port de la carte ; et les informations de port de la carte comprennent au moins un identifiant de port, un type de port et une description de port.

2. Procédé selon la revendication 1, dans lequel après la réception, par le dispositif de commande SDN, des informations sur la capacité du dispositif en provenance du premier transmetteur, le procédé comprend également :
l'ajout, par le dispositif de commande SDN, des informations sur la capacité du dispositif à la base d'informations sur la capacité du dispositif matériel.

3. Procédé selon l'une quelconque des revendications 1 ou 2, dans lequel le procédé comprend en outre :
la détermination, par le dispositif de commande SDN, que la base d'informations sur la capacité du dispositif matériel comprend le type de dispositif et le modèle de dispositif du premier transmetteur ; et
l'approvisionnement, par le dispositif de commande SDN, des données de configuration de service au premier transmetteur.

4. Procédé selon l'une quelconque des revendications 1 à 3, dans lequel
les informations sur le dispositif comprennent au moins le type de dispositif, le modèle de dispositif, une description du dispositif, un ensemble de capacités du dispositif, une quantité de créneaux et les informations de créneau pris en charge ; et les informations de créneau comprennent au moins un identifiant de créneau et un type de créneau.

5. Un dispositif de commande de mise en réseau définie par logiciel (SDN), comprenant une unité de réception (61), une unité de détermination (62) et une unité d'envoi (63), dans lequel
l'unité de réception est configurée pour recevoir des informations d'enregistrement provenant d'un premier transmetteur, dans laquelle les informations d'enregistrement comprennent un type de dispositif et un modèle de dispositif du premier transmetteur ;
l'unité de détermination est configurée pour déterminer si une base d'informations sur la capacité du dispositif matériel comprend le type de dispositif ou le modèle de dispositif inclus dans les informations d'enregistrement reçues du premier transmetteur, dans lequel le type de dispositif et le modèle de dispositif sont reçus par l'unité de réception ; l'unité d'envoi est configurée pour : lorsque l'unité de détermination détermine qu'une base d'informations sur la capacité du dispositif matériel ne comprend pas le type de dispositif ou le modèle de dispositif inclus dans les informations d'enregistrement reçues de la part du premier transmetteur, envoyer une demande de données plug and play (PnP) au premier transmetteur, dans laquelle la demande de données PnP est utilisée pour demander au premier transmetteur de rapporter des informations sur la capacité du dispositif ; et
l'unité de réception est également configurée pour recevoir les informations sur la capacité du dispositif en provenance du premier transmetteur ;
dans lequel les informations sur la capacité du dispositif sont un fichier XML de langage de balisage extensible utilisant un modèle YANG ; et
les informations sur la capacité du dispositif comprennent au moins l'une des informations sur le dispositif du premier transmetteur et des informations de carte prises en charge par le premier transmetteur,
dans lequel les informations de carte comprennent au moins un type de carte, un nom de carte, une description de carte, un ensemble de capacités de carte, une quantité de ports d'une carte et des informations de port de la carte ; et les informations de port de la carte comprennent au moins un identifiant de port, un type de port et une description de port.

6. Dispositif de commande SDN selon la revendication 5, comprenant également une unité d'ajout (64), dans lequel
l'unité d'ajout est configurée pour ajouter les informations sur la capacité du dispositif reçues par l'unité de réception à la base d'informations sur la capacité du dispositif matériel.

7. Le dispositif de commande SDN selon l'une quelconque des revendications 5 ou 6, dans lequel
les informations sur le dispositif comprennent au moins le type de dispositif, le modèle de dispositif, une description du dispositif, un ensemble de capacités du dispositif, une quantité de créneaux et les informations de créneau pris en charge ; et les informations de créneau comprennent au moins un identifiant de créneau et un type de créneau.
